Europäisches Patentamt

**European Patent Office**

**Office européen des brevets**

(11) Numéro de publication : **0 005 434**
**B1**

(12) **FASCICULE DE BREVET EUROPÉEN**

(45) Date de publication du fascicule du brevet :
**13.01.82**

(51) Int. Cl.³ : **F 16 B 37/04**

(21) Numéro de dépôt : **79100762.8**

(22) Date de dépôt : **14.03.79**

(54) **Ecrou-insert et dispositif de pose s'y rapportant.**

(30) Priorité : **21.03.78 FR 7808084**

(43) Date de publication de la demande :
**28.11.79 (Bulletin 79/24)**

(45) Mention de la délivrance du brevet :
**13.01.82 Bulletin 82/02**

(84) Etats contractants désignés :
**BE CH DE GB IT LU NL SE**

(56) Documents cités :
**DE - U - 1 953 025**
**FR - A - 2 204 759**
**FR - A - 2 308 822**
**US - A - 2 075 675**
**US - A - 2 310 316**

(73) Titulaire : **Pavec, Albert Louis**
**8, rue Paul Vieille**
**F-51100 Reims (FR)**

(72) Inventeur : **Pavec, Albert Louis**
**8, rue Paul Vieille**
**F-51100 Reims (FR)**

(74) Mandataire : **Nithardt, Roland**
**CABINET ROLAND NITHARDT Rue Edouard Verdan**
**15**
**CH-1400 Yverdon (CH)**

Imprimerie Jouve, 18, rue St-Denis, 75001 Paris, France

## Ecrou-insert et dispositif de pose s'y rapportant

L'invention concerne un écrou-insert, en particulier pour la pose dite en aveugle par la face antérieure d'une tôle pourvue d'orifices récepteurs, de préférence carrés, la face postérieure étant en principe inaccessible, comprenant une embase polygonale monobloc ayant une face d'introduction correspondante en forme et en dimensions à l'orifice récepteur, cette face étant pourvue de moyens de prise déformables, aptes à immobiliser l'insert dans son orifice et une face postérieure présentant au moins sur deux de ses côtés parallèles, des chanfreins arrondis autorisant l'introduction de l'insert par ladite face antérieure, les moyens de prise déformables se présentant sous la forme de deux lignes parallèles de sertissage.

Elle concerne également un dispositif pour la mise en place d'un écrou-insert, comportant un corps de sertissage traversé axialement par une vis de pose pouvant pénétrer dans le filetage de l'écrou-insert, ce corps présentant une face frontale de sertissage comprenant deux rampes parallèles de sertissage aptes à venir en contact avec les faces internes de projection de l'écrou-insert, de manière telle que sous l'action d'une force de pression, lesdites projections soient pliées de leur position initiale perpendiculaire à la face de l'insert qui porte ces projections, à une position parallèle à ladite face dans une direction radiale externe.

Dans une première génération d'inserts, qui illustre l'état de la technique connue, on se référera au brevet US-A 1 757 142.

Dans ce brevet U.S. est décrit un écrou-insert à base rectangulaire, avec un orifice axial fileté, cet insert se présentant sous la forme générale d'un bloc parallélépipédique à arêtes vives.

Ce bloc comporte, sur l'une de ses faces frontales, deux projections parallèles continues en forme de coin, destinées à être déformées par estampage pour passer d'une position initiale perpendiculaire à la face frontale qui porte les projections, à une position parallèle à cette face, de manière à enserrer deux des bords d'un orifice polygonal, par exemple rectangulaire.

Cet insert ne permet pas la pose dite en aveugle, c'est-à-dire introduction de l'insert par la face antérieure d'une tôle, la face postérieure étant considérée comme inaccessible.

Cette impossibilité résulte de la forme parallélépipédique du bloc insert, dont la plus grande dimension ne permet pas l'introduction par ladite face antérieure.

Par ailleurs, en plus de l'impossibilité de pose en aveugle, un tel insert ne peut être serti qu'à l'aide d'une presse de forte puissance, et, dans la pratique, il se produit des déformations radiales qui convergent au centre du passage fileté, ce qui rend difficile, voire impossible la pose d'une vis dans un insert ainsi déformé.

Dans une seconde génération d'inserts, on a recherché à résoudre le problème de la pose dite en aveugle. Pour ce faire, on a réalisé un écrou et un outil de pose tels que décrits dans la demande de brevet français FR-A 2 308 822. Sur cet outil, la face frontale opposée aux arêtes déformables de l'écrou comporte deux chanfreins arrondis, en lieu et place des arêtes vives, connues, ce grâce à quoi, par simple pivotement dans le plan de l'orifice de la tôle, l'insert peut être introduit, puis mis en butée par les parties débordantes dont la dimension hors tout, dépasse la plus grande dimension de l'orifice.

Si un tel insert donne satisfaction dans son principe de pose, il offre cependant des difficultés lorsqu'il doit être adapté à une fabrication industrielle, et également à une pose rapide dans les montages en grandes séries.

En effet, au stade de la fabrication, il est très intéressant, tant pour la rapidité d'élaboration que pour le coût, d'obtenir de tels inserts dans un procédé dit de frappe à froid. Jusqu'à ce jour, ce procédé n'a pu être appliqué aux inserts du genre indiqué, en raison de la finesse des lèvres de sertissage, ou projections, finesse rendue obligatoire lorsque l'on désire réaliser une pose manuelle de l'insert, c'est-à-dire à l'aide d'un outil à main par opposition aux presses traditionnelles fixes. Par ailleurs, un tel outil doit avoir une force de sertissage inférieure au seuil de déformation du filetage de l'insert, si l'on veut garder une stabilité dimensionnelle lors de la pose.

Quel que soit le mode de pose en soi connu, qui peut être retenu, il s'avère toujours long en raison de l'instabilité de l'insert sur une tige filetée au moment de son introduction au travers de l'orifice de pose, ce qui occasionne des ratés d'introduction, par défaut de mise en coïncidence avec ledit orifice.

La présente invention a pour but de remédier à ces inconvénients, en créant une structure d'écrou-insert nouvelle, qui permette, d'une part, de faciliter la pose dite en aveugle, et sa mise en place rapide sans ratés, d'autre part, la mise en œuvre d'un appareillage de pose simple, manuel, ne nécessitant pas une main-d'œuvre spécialement qualifiée.

L'écrou-insert selon l'invention peut être fabriqué par frappe à froid.

Ce but est atteint en ce que l'écrou-insert, selon l'invention est caractérisé en ce que chaque ligne de sertissage comporte deux projections déformables séparées par une encoche située en partie médiane de chaque ligne, de façon à ménager un espace libre entre deux projections, qui affaiblit d'une part la résistance au pliage des projections déformables et d'autre part, sert de logement à un doigt d'immobilisation et de guidage, issu d'un dispositif de mise en place de l'écrou-insert.

Le dispositif pour la mise en place de cet écrou-insert est caractérisé en ce que le corps de sertissage comprend un doigt d'immobilisation escamotable ayant une extrémité qui pénètre, lors de la mise en place de l'écrou-insert sur le dispositif de pose, dans l'espace qui sépare deux projections adjacentes.

Par cette mesure, l'écrou est immobilisé en rotation sur la vis de pose du dispositif, ce qui permet aussi bien l'introduction de l'écrou-insert sans risque de déplacement, que le guidage de la position d'introduction à la position d'application et le sertissage desdites projections, sans risque de rotation de l'écrou pendant cette opération.

Grâce à la disposition du doigt d'immobilisation escamotable le long d'une génératrice de la vis de pose, on obtient une mise en place guidée de l'insert jusqu'à sa mise en place définitive dans son orifice récepteur.

D'autres caractéristiques et avantages ressortiront encore de la description détaillée d'un mode d'exécution préféré de l'invention, donné ici à titre d'exemple et représenté sur les dessins joints, dans lesquels :

La figure 1 est une vue en perspective, montrant l'ensemble écrou-insert et dispositif de pose.

La figure 2 est une vue en coupe, montrant un premier mode de sertissage de l'insert au travers de l'orifice ménagé dans une tôle.

La figure 3 est une vue en coupe, montrant un second mode de sertissage.

La figure 4 est une vue schématique, montrant la première phase de pose de l'écrou-insert à l'aide du dispositif s'y rapportant.

La figure 5 est une vue schématique, montrant le passage de l'insert au travers d'un orifice récepteur.

La figure 6 est une vue schématique, montrant la phase de guidage dans l'axe de l'orifice récepteur.

La figure 7 est une vue schématique, montrant l'immobilisation de l'écrou-insert par rapport au dispositif de pose.

La figure 8 est une vue schématique, montrant la phase d'immobilisation de l'écrou-insert par rapport à l'orifice récepteur.

La figure 9 est une vue schématique, montrant un premier mode de sertissage selon l'invention.

La figure 10 montre une variante de sertissage de l'écrou-insert.

En référence aux figures, l'écrou-insert comporte un corps d'écrou désigné par la référence générale 10. Dans l'exemple d'exécution représenté, le corps d'écrou 10 est de forme générale parallélépipédique, son contour s'inscrivant de préférence dans un rectangle. L'écrou-insert présente une face d'introduction 11, dont le contour s'inscrit par exemple dans un carré. La dimension de ce carré correspond à la dimension d'un orifice récepteur, ménagé par exemple dans une pièce de métal en feuille, par exemple une tôle, sur laquelle on désire mettre en place un ou plusieurs écrous-inserts.

L'embase de l'écrou-insert comporte une face postérieure 12, qui est raccordée à chaque fois à une aile d'appui débordante 13, par l'intermédiaire d'un chanfrein 14, s'inscrivant de préférence dans un rayon R. L'écrou-insert est traversé en son centre d'un orifice fileté 15, servant d'une part à la pose de l'écrou-insert, et d'autre part, de moyen de prise après pose, à un organe de serrage du genre vis, tige filetée, goujon.

La face d'introduction 11 de l'écrou-insert, présente des moyens de prise déformables, répartis sur deux lignes de sertissage parallèles, respectivement L1, L2. Les moyens de prise sont formés par des projections 17, 18 qui s'étendent, à l'état non posé de l'écrou-insert, dans une direction perpendiculaire au plan de la face d'introduction 11. Chaque ligne de sertissage est interrompue par une encoche 16, située en partie médiane de ces lignes, de manière à ménager un espace libre entre les projections 17, 18. De cette manière, on affaiblit la résistance au pliage des projections déformables, et on constitue un logement pour un doigt d'immobilisation et de guidage, issu d'un dispositif de mise en place qui sera décrit en détail plus loin.

Suivant un mode d'exécution préféré, chaque projection déformable présente un côté latéral 19, qui converge vers le sommet de l'arête 20 de chaque projection ; on obtient ainsi des projections de forme générale pyramidale, dont au moins certains des côtés tels que 19 sont pentus, afin de constituer des rampes de guidage et de centrage par rapport aux côtés correspondants de l'orifice récepteur de l'écrou-insert.

On notera encore la présence d'un sillon 21, situé entre la façon externe 22 des projections, et les ailes d'appui débordantes 13 de l'écrou-insert. Le sillon 21 a sa ligne de fond située en dessous du plan de la face d'introduction 11 de l'écrou-insert.

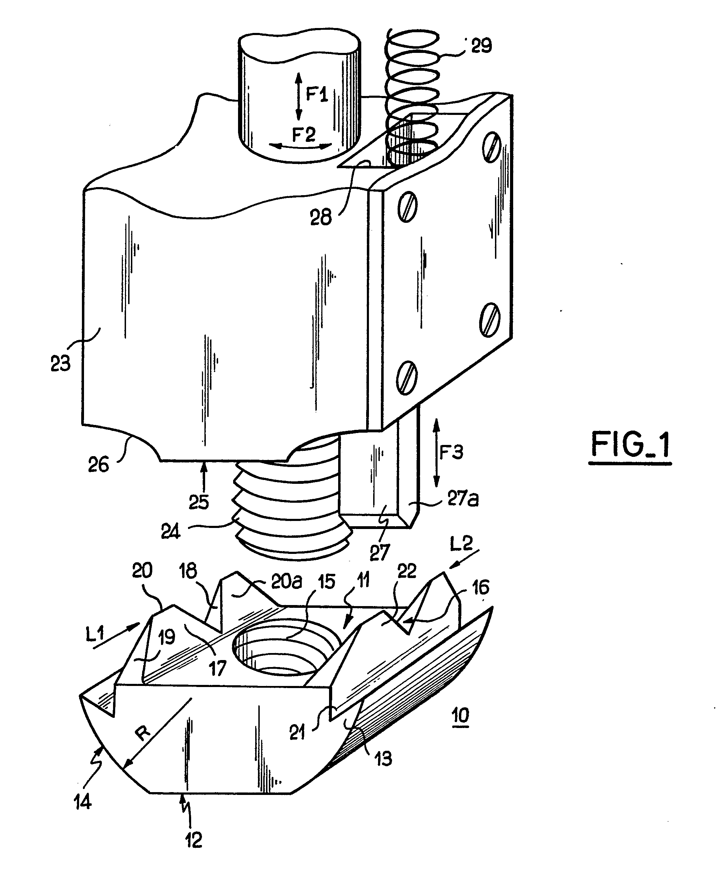

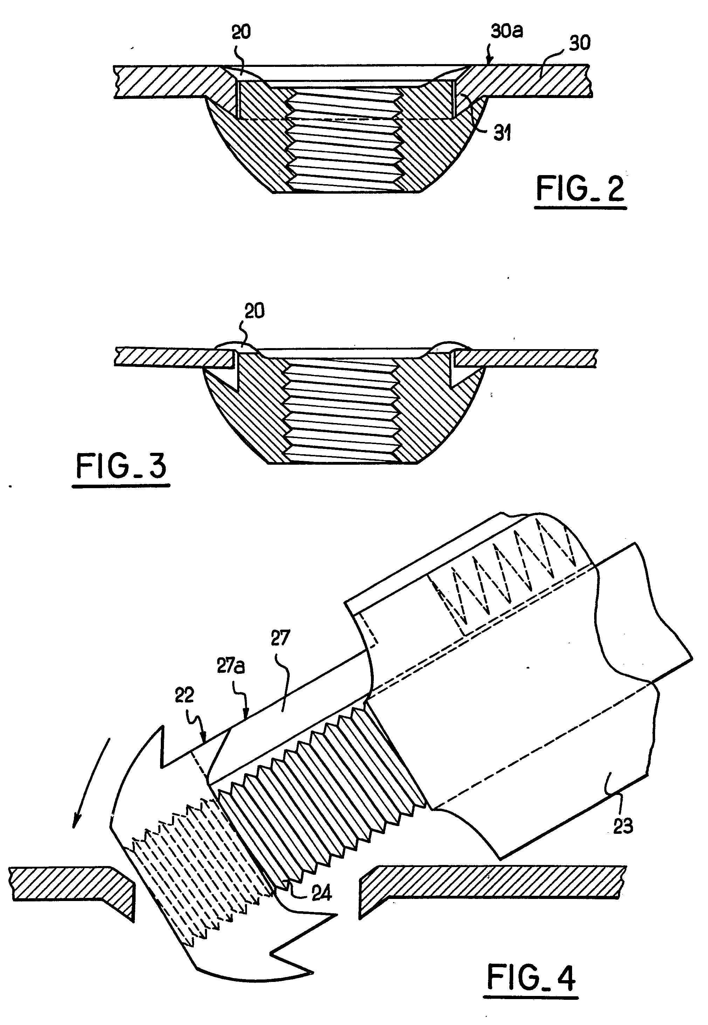

En référence à la figure 1, on constitue le dispositif de pose de l'écrou-insert qui vient d'être décrit, au moyen d'un corps de sertissage 23, traversé axialement par une vis de pose 24, pouvant pénétrer dans le filetage 15 de l'écrou-insert. Lorsque la vis 24 a été introduite dans le filetage 15 de l'écrou-insert, cette même vis peut être actionnée de deux manières différentes pour obtenir un mouvement de rapprochement ou d'éloignement entre le corps de sertissage 23 et les projections déformables de l'écrou-insert. Un premier mouvement d'éloignement ou de rapprochement peut être obtenu par la mise en rotation de la vis 24, selon la flèche F2. Un second mouvement de rapprochement ou d'éloignement peut être obtenu par déplacement axial suivant la flèche F1. Le corps de sertissage présente une face frontale de sertissage 25, comprenant deux rampes parallèles de sertissage 26, aptes à venir en contact avec les faces internes 20a des projections, de manière telle que, sous l'action d'une force de pression, lesdites projections soient pliées de leur position initiale perpendiculaire à la face 11 de l'insert, à une position parallèle à ladite face, dans une direction radiale externe, ainsi qu'il est montré notamment aux figures 2 et 3.

Le corps de sertissage du dispositif de pose présente, le long de l'une des génératrices de la vis 24, un doigt d'immobilisation 27, escamotable axialement suivant la flèche F3. Ce doigt présente une extrémité qui pénètre, lors de la mise en place de l'écrou-insert 10 sur le dispositif de pose, dans l'espace 16 qui sépare deux projections adjacentes ; de cette manière, l'écrou-insert est immobilisé en rotation par rapport à la vis de pose 24, ce qui facilite, grâce à cette immobilisation, la mise en place de l'écrou-insert au travers de son orifice récepteur. Le doigt 27 est disposé dans un logement de guidage 28 du corps de sertissage, ce doigt étant chargé par un ressort de compression 29, de manière à être constamment en contact avec l'encochage 16, lorsque la vis 24 est introduite dans l'orifice fileté 15 de l'écrou.

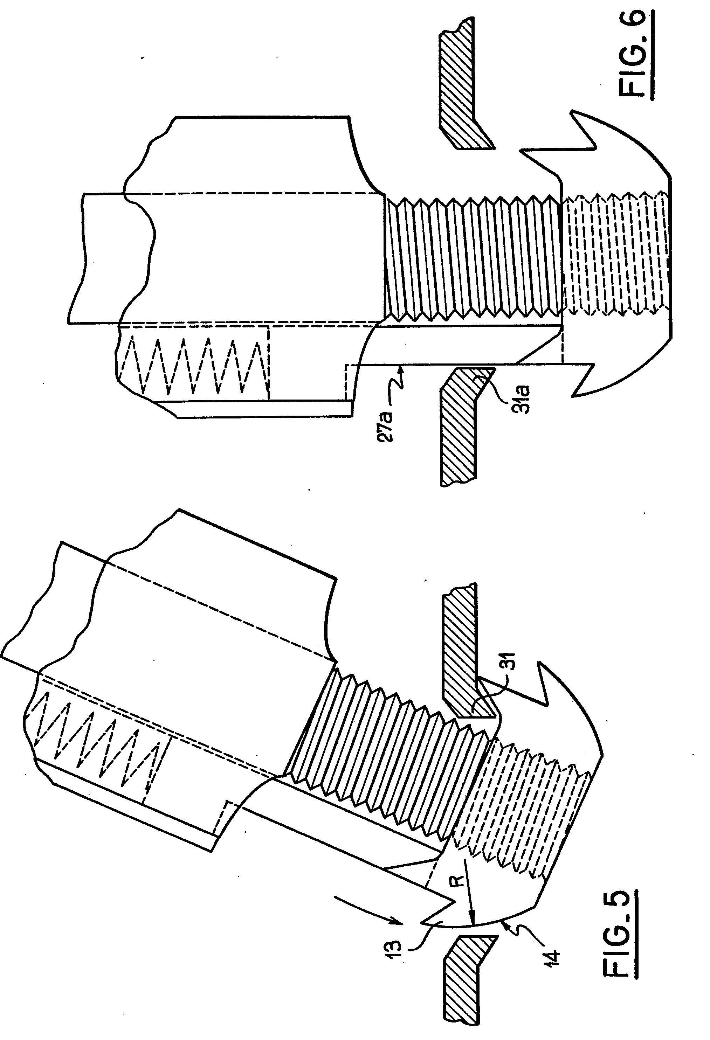

Suivant une disposition qui apparaît plus clairement aux figures 4, 5 et 6, le doigt 27 possède une face de guidage 27a, qui est alignée sur la face latérale externe 22 des projections de l'écrou-insert, de sorte que, lors de la pose de cet écrou, au travers d'un orifice récepteur, ladite face de guidage du doigt d'immobilisation vienne en contact avec la paroi correspondante de l'orifice récepteur. Cette solution et son mode d'application apparaîtront plus particulièrement à l'examen de la figure 6.

En figure 2, on a montré l'écrou-insert 10 à l'état posé dans l'orifice d'une tôle 30, selon un premier mode d'exécution. Selon ce mode, deux des bords 31 de l'orifice récepteur ont été déformés pour pénétrer dans le sillon 21 de l'écrou-insert, de sorte que, après sertissage, les arêtes 20 des projections 17 et 18 se trouvent au même niveau que le plan moyen de la face 30a de la tôle 30.

Dans le mode d'exécution représenté figure 3, les côtés 31 de la tôle 30 ne sont pas déformés et dans ce cas, les projections 17, 18, à l'état de sertissage, dépassent légèrement le plan moyen de la face 30a de la tôle 30.

On expliquera maintenant, en référence aux figures 4 à 10, les différentes phases d'une mise en place rapide, suivies d'un sertissage d'un insert conforme à l'invention.

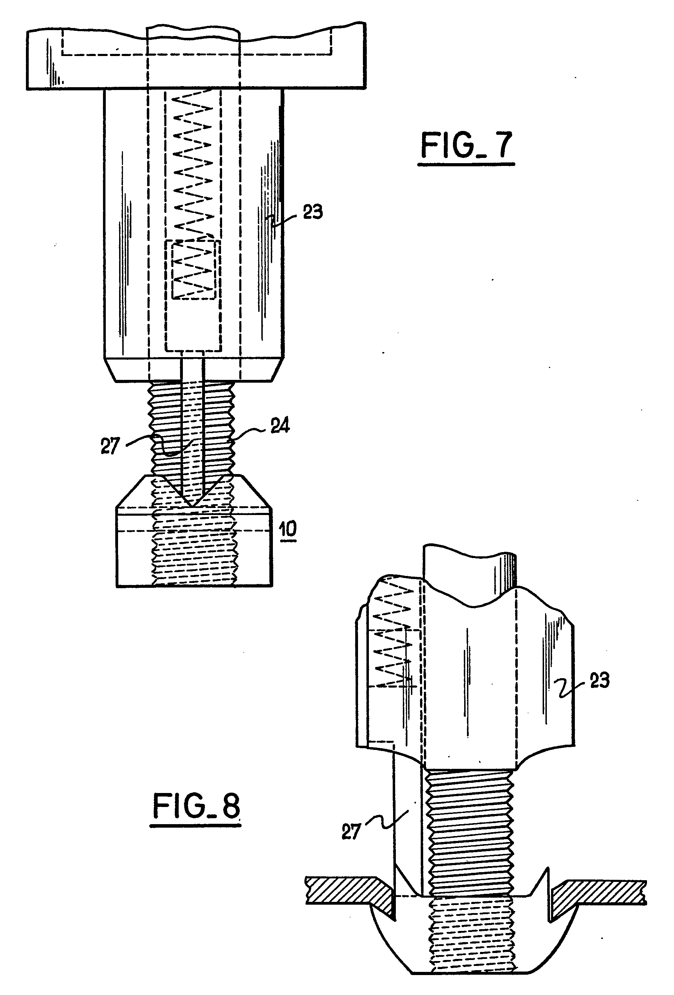

Ainsi qu'il est représenté figure 4, l'écrou-insert 10 étant fixé sur la vis de pose 24 du corps de sertissage 23, on notera, comme il a été indiqué plus haut, que la face 27a du doigt d'immobilisation 27 est alignée avec la face 22 des projections de sertissage. L'extrémité inférieure du doigt 27 est au contact de l'encoche 16 qui sépare deux projections comme montré figure 7. Le dispositif de pose et de sertissage 13 peut être associé à un outil de pose manuelle, tel par exemple un pistolet de vissage automatique du type à rotation, ou encore du type à rotation et mouvement de traction combinés.

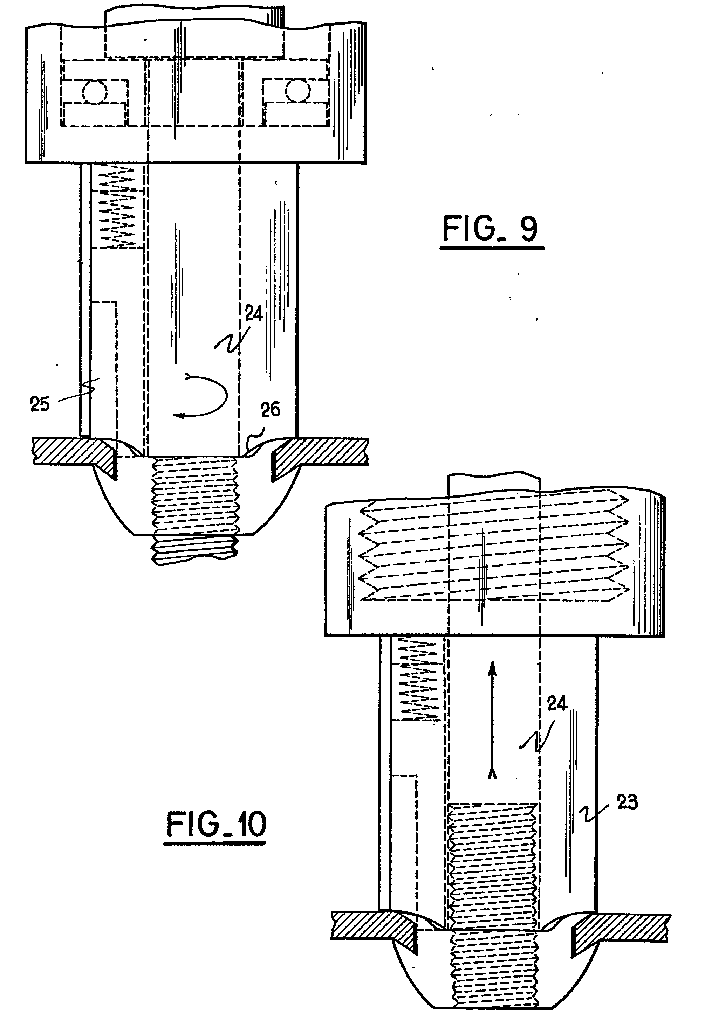

L'écrou-insert fixé au dispositif de pose est introduit par pivotement de manière à ce que les projections situées sur la ligne non occupée par le doigt d'immobilisation 27, soient introduites comme montré figure 5, sous l'un des bords 31 de l'orifice récepteur ménagé dans la tôle 30. Grâce à ce mode d'introduction et en raison de la présence des chanfreins 14 de l'écrou-insert, l'aile d'appui 13 peut passer librement sur le bord opposé au bord 31. Après passage de l'insert au travers de l'orifice récepteur ainsi représenté figure 6, la face 27a du doigt 27 est mise en contact avec le bord 31a de l'orifice récepteur, de sorte qu'il ne reste plus qu'à exercer un mouvement de traction axiale pour que l'insert soit introduit et mis en appui contre les bords de l'orifice récepteur, ainsi qu'il est montré figure 8. Pour l'opération de sertissage proprement dite, on pourra, comme montré en figure 9, mettre en rotation la vis 24 du dispositif de pose, ce qui produira, pour un sens de rotation, le rapprochement de la face de sertissage 26 des projections de l'écrou-insert, la mise en contact et le sertissage proprement dit. On notera que pendant toute la durée de la rotation, l'écrou-insert aura été maintenu immobile grâce à l'ancrage du doigt d'immobilisation 27 dans l'encochage qui sépare les projections de sertissage.

Dans le mode d'exécution de la figure 10, on procède au sertissage en imprimant à la vis 24 un mouvement de traction qui met en appui la face de sertissage du dispositif 23 avec les projections de sertissage de l'écrou-insert.

Il va de soi que l'invention n'est pas limitée aux modes d'exécution ci-dessus décrits et représentés, pour lesquels on devra prévoir d'autres formes de réalisation, sans pour cela sortir du cadre des revendications annexées.

**Revendications**

1. Ecrou-insert, en particulier pour la pose dite en aveugle par la face antérieure d'une tôle pourvue d'orifices récepteurs, de préférence carrés, la face postérieure étant en principe inaccessible, comprenant une embase polygonale monobloc ayant une face d'introduction (11) correspondante en forme et en dimensions à l'orifice récepteur, cette face étant pourvue de moyens de prise déformables, aptes à immobiliser l'insert dans son orifice et une face postérieure (12) présentant au moins sur deux de ses côtés parallèles, des chanfreins (14) arrondis autorisant l'introduction de l'insert par ladite face antérieure, les moyens de prise déformables se présentant sous la forme de deux lignes parallèles de sertissage (L1, L2) caractérisé en ce que chaque ligne de sertissage comporte deux projections déformables (17, 18) séparées par une encoche (16) située en partie médiane (17, 18) de chaque ligne, de façon à ménager un espace libre entre deux projections, qui affaiblit d'une part la résistance au pliage des projections déformables et d'autre part, sert de logement à un doigt (27) d'immobilisation et de guidage, issu d'un dispositif de mise en place de l'écrou-insert.

2. Ecrou-insert selon la revendication 1, caractérisé en ce que les deux projections déformables (17, 18) présentent chacune des côtés latéraux (19) convergeant vers l'arête (20) de manière telle que les côtés externes de deux projections adjacentes constituent des rampes de guidage et de centrage par rapport aux côtés correspondants de l'orifice récepteur de l'écrou-insert.

3. Dispositif pour la mise en place d'un écrou-insert selon les revendications 1 et 2, comportant un corps de sertissage (23) traversé axialement par une vis de pose (24) pouvant pénétrer dans le filetage (15) de l'écrou-insert (10), ce corps présentant une face frontale de sertissage comprenant deux rampes parallèles (26) de sertissage aptes à venir en contact avec les faces internes de projection (17, 18) de l'écrou-insert, de manière telle que sous l'action d'une force de pression, lesdites projections soient pliées de leur position initiale perpendiculaire à la face de l'insert qui porte ces projections à une position parallèle à ladite face dans une direction radiale externe, caractérisé en ce que le corps de sertissage (23) comprend un doigt d'immobilisation (27) escamotable ayant une extrémité qui pénètre, lors de la mise en place de l'écrou-insert sur le dispositif de pose, dans l'espace (16) qui sépare deux projections (17, 18) adjacentes.

4. Dispositif selon la revendication 3, caractérisé en ce que le doigt d'immobilisation (27) escamotable de l'écrou-insert est disposé le long d'une génératrice de la vis de pose (24) et mobile axialement le long de cette vis, ce doigt, sollicité par ressort (29), coulissant dans un logement de guidage (28) ménagé dans le corps de sertissage, ce doigt ayant une face de guidage (27a) alignée sur la face latérale externe des projections, de sorte que, lors de la pose de l'écrou-insert au travers d'un orifice récepteur, ladite face de guidage du doigt d'immobilisation vienne en contact avec la paroi correspondante de l'orifice récepteur.

**Claims**

1. Insert-nut, particularly for so-called blind fixing by the front side of a metal sheet provided with receiving openings, preferably square, the posterior side being in principle inaccessible, comprising a polygonal base made in one piece having an introduction side (11) corresponding in form and in size to the receiving opening, this side being provided with deformable gripping means, capable of fixing the insert in its opening and a posterior side (12) presenting at least on two of its parallel sides, rounded chamfers (14) allowing the introduction of the insert by the said front side, the deformable gripping means being presented in the form of two parallel tightening lines (L1, L2) characterized in that each tightening line comprises two deformable projections (17, 18) separated by a slot (16) situated in the middle (17, 18) of each line in such a way as to make a free space between two projections, which weakens on the one hand the resistance to bending of the deformable projections and on the other hand, serves as a lodging place for an immobilization and guiding finger (27), originating from a placing device of the insert-nut.

2. Insert-nut according to claim 1, characterized in that the two deformable projections (17, 18) each present lateral sides (19) converging towards the edge (20) in such a way that the external sides of the two adjacent projections constitute guiding and centring ramps with respect to the corresponding sides of the receiving opening of the insert-nut.

3. Device for placing an insert-nut according to claims 1 and 2, comprising a tightening body (23) traversed axially by a fixing screw (24) which can penetrate in the threading (15) of the insert-nut (10), this body presenting a front tightening side comprising two parallel tightening ramps (26) capable of coming into contact with the internal sides of projection (17, 18) of the insert-nut, in such a way that under the action of a pressure force, the said projections are bent from their initial position perpendicular to the side of the insert which bears these projections to a position parallel to the said side in an external radial direction, characterized in that the tightening body (23) comprises an immobilization retractable finger (27) having one end which penetrates, when placing the insert-nut on the fixing device, in the space (16) which separates two adjacent projections (17, 18).

4. Device according to claim 3, characterized in that the immobilization retractable finger (27) of the insert-nut is placed along an axis of the fixing screw (24) and mobile axially along this screw, this finger, pulled by a spring (29), sliding in a guiding lodge (28) made in the tightening body, this finger having a guiding side (27a) aligned on the external lateral side of the projections, so that, when placing the insert-nut through a receiving opening, the said guiding side of the immobilizaton finger comes into contact with the corresponding wall of the receiving opening.

**Ansprüche**

1. Einsteckmutter, insbesondere zum sogenannten Blindeinbau durch die Vorderfläche eines mit vorzugsweise rechteckigen Aufnahmeöffnungen versehenen Bleches, dessen Hinterfläche grundsätzlich unzugänglich ist, mit einer mehrflächigen, einstückigen Fußfläche, die eine Einführfläche (11) aufweist, deren Form und Abmessungen der Aufnahmeöffnung entsprechen und die mit deformierbaren Haltemitteln versehen ist, die die Mutter in der Öffnung feststellen und mit einer Hinterfläche (12), die an wenigstens zwei ihrer Parallelseiten abgerundete Kanten (14) aufweist zur Einführung der Mutter durch die Vorderfläche hindurch, wobei die deformierbaren Haltemittel die Form zweier paralleler Klemmlinien (L1, L2) aufweisen, dadurch gekennzeichnet, daß jede der Klemmlinien zwei deformierbare Vorsprünge (17, 18) aufweist, die durch eine Kerbe (16) im Mittelteil (17, 18) jeder Linie getrennt sind, so daß ein freier Raum zwischen zwei Vorsprüngen entsteht, der einerseits den Biegewiderstand der deformierbaren Vorsprünge verringert und andererseits zur Aufnahme eines Feststell- und Führungsarmes (27) dient, der zu einer Einführvorrichtung für die Einsteckmutter gehört.

2. Einsteckmutter nach Anspruch 1, dadurch gekennzeichnet, daß die beiden deformierbaren Vorsprünge (17, 18) je zur Kante (20) konvergierende Seitenfläche (19) aufweisen, so daß die Außenflächen zweier benachbarter Vorsprünge Führungs- und Zentrierungsflächen bezüglich der entsprechenden Seiten der Aufnahmeöffnung für die Einsteckmutter bilden.

3. Vorrichtung zum Einsetzen von Einsteckmuttern gemäß Ansprüchen 1 und 2 mit einem Quetschkörper (23), der axial von einer Einsteckschraube (24) durchsetzt wird, die in die Bohrung (15) der Einsteckmutter (10) eingreifen kann, wobei der Körper eine vordere Quetschfläche mit zwei parallelen Quetschebenen (26) aufweist, die an den Innenflächen der Vorsprünge (17, 18) der Einsteckmutter anliegen können, so daß unter der Einwirkung einer Kraft die Vorsprünge aus ihrer ursprünglichen Stellung senkrecht zur Einführfläche der Mutter, die die Vorsprünge trägt, in eine Stellung parallel zu dieser Fläche und radial nach außen gebogen werden, dadurch gekennzeichnet, daß der Quetschkörper (23) einen verschiebbaren Feststellarm (27) aufweist, dessen eines Ende während des Einsetzens der Mutter in die Einsteckvorrichtung in die Aussparung (16) eindringt, die zwei benachbarte Vorsprünge (17, 18) voneinander trennt.

4. Vorrichtung nach Anspruch 3, dadurch gekennzeichnet, daß der verschiebbare Feststellarm (27) für die Einsteckmutter entlang einer Erzeugenden der Einsteckschraube (24) angeordnet ist und in axialer Richtung entlang dieser Schraube beweglich ist und unter der Einwirkung einer Feder (29) in einer Führungsöffnung (28) gleitet, die im Quetschkörper angeordnet ist, und daß der Arm eine Führungsfläche (27a) aufweist, die zur äußeren Seitenfläche der Vorsprünge derart ausgerichtet ist, daß während des Einsetzens der Einsteckmutter in die Aufnahmeöffnung die Führungsfläche des Feststellarmes die entsprechende Wand der Aufnahmeöffnung berührt.

FIG_1

FIG_2

FIG_3

FIG_4

2

0 005 434

13

R

14

31

FIG.5

27a

31a

FIG.6

## FIG_7

23

27

24

10

## FIG_8

23

27

FIG. 9

FIG. 10